# EUROPEAN PATENT APPLICATION

(11) **EP 4 847 953 A1**
(43) Date of publication of application: **02.12.2026**
(21) Application number: 25218929.5
(22) Date of filing: 27.11.2025
(51) Int. Cl.: G01S 7/4863, G01S 17/894, H04N 25/77

(54) **IMAGE SENSING DEVICE AND METHOD FOR OPERATING THE SAME**

(30) Priority: 27.05.2025 KR 20250069280
(71) Applicant: SK hynix Inc., Bubal-eub Icheon-si Gyeonggi-do 17336 (KR)
(72) Inventor: YUN, Gun Hee, 17336 Icheon-si (KR); KIM, Kang Ho, 17336 Icheon-si (KR); CHOI, Jeong Ik, 17336 Icheon-si (KR); KIM, Min Kyu, 17336 Icheon-si (KR); KIM, Han Sang, 17336 Icheon-si (KR); PARK, Da Hwan, 17336 Icheon-si (KR); PARK, Han Sol, 17336 Icheon-si (KR)
(74) Representative: Isarpatent

(57) **Abstract**

An image sensing device includes a single photon avalanche diode (SPAD) configured to generate a voltage pulse in response to incident light; a bias voltage generator configured to generate a plurality of bias voltages based on a source voltage; a bias voltage selection controller configured to generate a bias voltage selection signal for selecting candidate bias voltages to be applied to an anode of the SPAD from among the plurality of bias voltages; and a single photon avalanche diode (SPAD) controller configured to determine one of the candidate bias voltages as a decision bias voltage to be applied to the anode of the SPAD, based on electrical characteristics of the SPAD, which are measured respectively when the candidate bias voltages are applied to the SPAD.

## Description

### CROSS-REFERENCE TO RELATED APPLICATION

This patent application claims the priority and benefits of Korean patent application No. 10-2025-0069280, filed on May 27, 2025, the disclosure of which is incorporated herein by reference in its entirety.

### TECHNICAL FIELD

The embodiments of the present disclosure generally relate to an image sensing device capable of detecting a distance to a target object, and a method for operating the same.

### BACKGROUND

An image sensing device is a device for capturing optical images by converting light into electrical signals using a photosensitive semiconductor material which reacts to light. With the development of automotive, medical, computer and communication industries, the demand for high-performance image sensing devices is increasing in various fields such as smartphones, digital cameras, game machines, IoT (Internet of Things), robots, security cameras and medical micro cameras.

Recently, image sensing devices have been actively used not only to acquire color images but also to sense the distance to a target object to be captured. In particular, a time of flight (ToF) method, which directly or indirectly measures a time duration in which light is reflected from the target object and returns to the image sensing device, has been widely used.

### SUMMARY

Various embodiments of the present disclosure relate to an image sensing device capable of reducing a deviation between pixels included in a pixel array, and a method for operating the same.

In accordance with an embodiment of the present disclosure, an image sensing device may include a single photon avalanche diode (SPAD) configured to generate a voltage pulse in response to incident light; a bias voltage generator configured to generate a plurality of bias voltages based on a source voltage; a bias voltage selection controller configured to generate a bias voltage selection signal for selecting candidate bias voltages to be applied to an anode of the SPAD from among the plurality of bias voltages; and a single photon avalanche diode (SPAD) controller configured to determine one of the candidate bias voltages as a decision bias voltage to be applied to the anode of the SPAD, based on electrical characteristics of the SPAD, which are measured respectively when the candidate bias voltages are applied to the SPAD.

In accordance with another embodiment of the present disclosure, an image sensing device may include a pixel array including a plurality of pixels; a bias voltage generator configured to generate a plurality of bias voltages based on a source voltage; and a single photon avalanche diode (SPAD) controller configured to determine one of the plurality of bias voltages as a decision bias voltage. Each of the plurality of pixels may include a SPAD configured to generate a voltage pulse in response to incident light; a bias voltage selector configured to select candidate bias voltages to be applied to an anode of the SPAD from among the plurality of bias voltages; a storage circuit included in the bias voltage selector and configured to control a plurality of transistors for applying the candidate bias voltage to the anode of the SPAD; and a pixel selector configured to activate the storage circuit. The SPAD controller may determine the decision bias voltage based on electrical characteristics of the SPAD, which are measured respectively when the candidate bias voltages are applied to the SPAD.

In accordance with another embodiment of the present disclosure, a method for operating an image sensing device may include applying candidate bias voltages, which are selected from among the plurality of bias voltages, to an anode of a single photon avalanche diode (SPAD) included in each of a plurality of pixels; measuring electrical characteristics of the SPAD respectively when the candidate bias voltages are applied to the SPAD, and determining a decision bias voltage to be applied to the anode of the SPAD based on the measured electrical characteristics.

It is to be understood that both the foregoing general description and the following detailed description of the present disclosure are illustrative and descriptive and are intended to provide further description of the embodiments of the present disclosure as claimed.

### BRIEF DESCRIPTION OF THE DRAWINGS

The above and other features and beneficial aspects of the embodiments of the present disclosure will become readily apparent with reference to the following detailed description when considered in conjunction with the accompanying drawings.
FIG. 1 is a block diagram illustrating an imaging device based on some embodiments of the present disclosure.
FIG. 2 is a block diagram illustrating an image sensing device based on some embodiments of the present disclosure.
FIG. 3 is a diagram specifically illustrating a pixel based on some embodiments of the present disclosure.
FIG. 4 is a diagram illustrating a method for operating the image sensing device based on some embodiments of the present disclosure.

### DETAILED DESCRIPTION

The present disclosure provides embodiments of an image sensing device capable of detecting a distance to a target object and a method for operating the same that may be used in configurations to substantially address one or more technical or engineering issues and to mitigate limitations or disadvantages encountered in some other image sensing devices. Some embodiments of the present disclosure relate to an image sensing device capable of reducing a deviation between pixels included in a pixel array, and a method for operating the same. In recognition of the issues above, the image sensing device and the method for operating the same according to the embodiments of the present disclosure may control each pixel to operate in an optimal state, thereby reducing a deviation between pixels included in the pixel array.

Reference will now be made in detail to some embodiments of the present disclosure which are illustrated in the accompanying drawings. Wherever possible, the same reference numbers will be used throughout the drawings to refer to the same or like parts. While the embodiments are susceptible to various modifications and alternative forms, specific embodiments thereof are shown in the drawings. However, the embodiments should not be construed as being limited to the embodiments set forth herein.

Hereinafter, various embodiments will be described with reference to the accompanying drawings. However, it should be understood that the embodiments of the present disclosure are not limited to specific embodiments, but include various modifications, equivalents and/or alternatives of the embodiments. The embodiments of the present disclosure may provide a variety of effects capable of being directly or indirectly recognized by one of ordinary skill in the art.

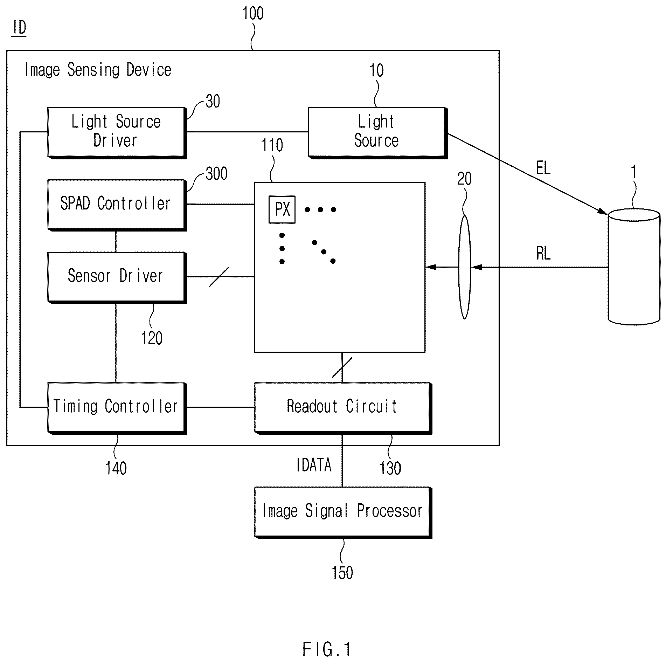

FIG. 1 is a block diagram illustrating an imaging device based on some embodiments of the present disclosure.

Referring to FIG. 1, the imaging device (ID) may refer to a device, for example, a digital still camera for photographing still images or a digital video camera for photographing moving images. For example, the imaging device (ID) may be implemented as a Digital Single Lens Reflex (DSLR) camera, a mirrorless camera, or a smartphone, and others. The imaging device (ID) may include a device having both a lens and an image pickup element such that the device can capture (or photograph) a target object and can thus create an image of the target object. In some embodiments, the imaging device (ID) may be implemented as a Lidar sensor.

The imaging device (ID) may include an image sensing device 100 and an image signal processor (ISP) 150.

The image sensing device 100 may be a complementary metal oxide semiconductor image sensor (CIS) for converting incident light into an electrical signal. The image sensing device 100 may include a light source 10, a lens module 20, a light source driver 30, a pixel array 110, a sensor driver 120, a readout circuit 130, and a timing controller 140.

The light source 10 may emit light to a target object 1 in response to a control signal from the light source driver 30. The light source 10 may be a laser diode (LD) or a light emitting diode (LED) for emitting light (e.g., near infrared (NIR) light, infrared (IR) light or visible light) having a specific wavelength band, or may be any of a Near Infrared Laser (NIR), a point light source, a monochromatic light source combined with a white lamp or a monochromator, and a combination of other laser sources. For example, the light source 10 may emit infrared light having a wavelength of 800 nm to 1000 nm. In the present disclosure, the light source 10 emits infrared light. Meanwhile, light emitted from the light source 10 may be pulsed light having a predetermined period, amplitude, and pulse width. Although FIG. 1 shows only one light source 10 for convenience of description, the scope or spirit of the present disclosure is not limited thereto, and a plurality of light sources may also be arranged in the vicinity of the lens module 20.

The lens module 20 may collect light reflected from the target object 1, and may allow the collected light to be focused onto pixels (PXs) of the pixel array 110. For example, the lens module 20 may include a focusing lens having a surface formed of glass or plastic or another cylindrical optical element having a surface formed of glass or plastic. The lens module 20 may include a plurality of lenses that is arranged to be focused upon an optical axis.

The light source driver 30 may drive the light source 10 under control of the timing controller 140. In particular, the light source driver 30 may control waveforms (e.g., a period, amplitude, pulse width, etc.) of emitted light (EL) output from the light source 10.

The pixel array 110 may include a plurality of pixels (PXs) consecutively arranged in a two-dimensional (2D) matrix structure (e.g., consecutively arranged in a column direction and/or a row direction). Each of the plurality of pixels (PXs) may generate a pixel signal by sensing incident light incident through the lens module 20 under control of the sensor driver 120.

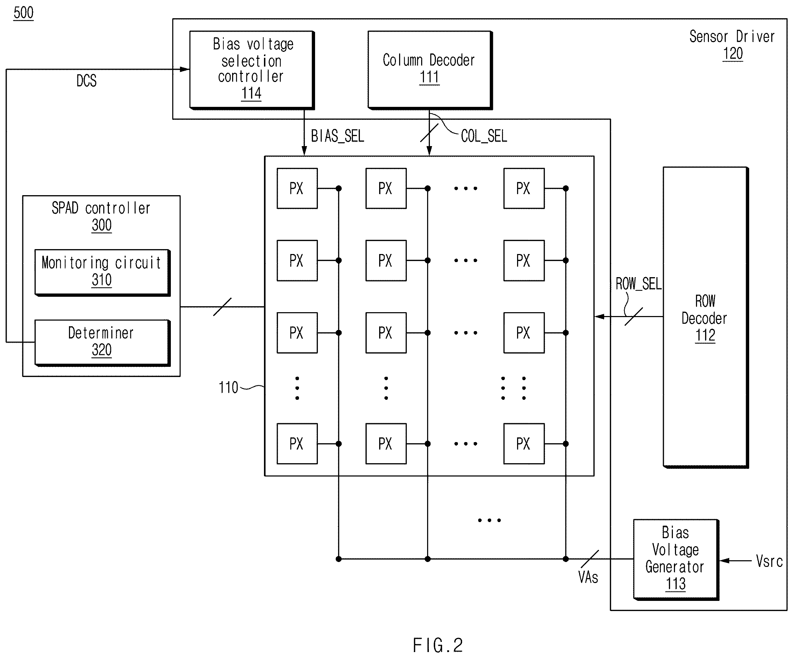

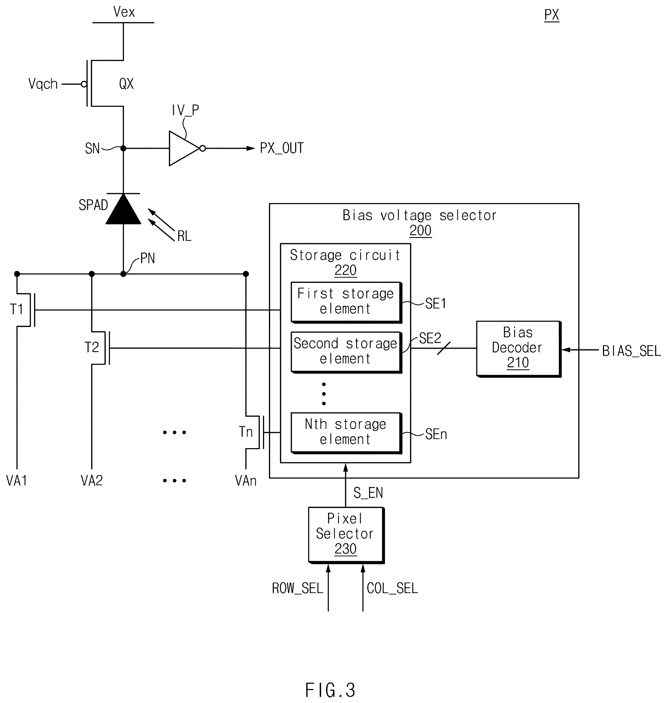

Each pixel (PX) may be an infrared pixel for generating a pixel signal by sensing incident light that includes reflected light (RL) generated when emitted light (EL) from the light source 10 is reflected from the target object 1. In some embodiments, the infrared pixel may be a depth pixel for calculating the distance to the target object 1. According to another embodiment, the infrared pixel may include a pixel for generating an infrared image by simply sensing infrared light incident from a scene without sensing reflected light. According to still another embodiment, the pixels (PXs) may include a pixel for generating a color image by sensing visible light incident from a scene. Hereinafter, description will be given such that each pixel (PX) is a single-photon avalanche diode (SPAD) pixel for detecting the distance to the target object 1 according to a direct time-of-flight (D-ToF) method. A more detailed structure and operations of each unit pixel (PX) will be described later with reference to the drawings from FIGS. 2 and 3.

The sensor driver 120 may drive the pixels (PXs) of the pixel array 110 in response to a timing signal output from the timing controller 140. For example, the sensor driver 120 may generate a control signal capable of selecting and controlling pixels (PXs) included in at least one row line from among a plurality of row lines of the pixel array 110.

A single photon avalanche diode (SPAD) controller 300 may measure electrical characteristics of each of the pixels (PXs) included in the pixel array 110. For example, the SPAD controller 300 may measure a voltage or leakage current at a specific node of each pixel (PX). The SPAD controller 300 may provide an electrical signal to the sensor driver 120 based on the measured electrical characteristics. Specific functions of the SPAD controller 300 will be described in detail with reference to FIGS. 2 to 4.

The readout circuit 130 may process pixel signals received from the pixel array 110 under control of the timing controller 140, and may generate and store depth data for detecting the distance to the target object 1. Specifically, the readout circuit 130 may calculate a candidate time-of-flight (ToF) corresponding to SPAD pulses generated by each pixel (PX) sensing the incident light including the reflected light (RL), and may store the candidate time-of-flight (ToF) corresponding to the SPAD pulses in units of a subframe. The readout circuit 130 may transmit the candidate time-of-flight (ToF) stored in units of a subframe to the image signal processor 150 under control of the timing controller 140.

The timing controller 140 may generate a timing signal to control the light source driver 30, the sensor driver 120, and the readout circuit 130. In some embodiments, the timing controller 140 may generate a timing signal according to data received from the readout circuit 130 and/or a request received from the image signal processor 150. In some embodiments, the timing controller 140 may include a logic control circuit, a phase locked loop (PLL) circuit, a timing control circuit, a communication interface circuit, etc.

The image signal processor 150 may perform at least one image signal process on image data (IDATA) received from the image sensing device 100, and may thus generate the processed image data. The image signal processor 150 may reduce noise of image data (IDATA), and may perform various types of image signal processing (e.g., interpolation of image data (IDATA), lens distortion correction, etc.) for image-quality improvement of the image data.

The image data (IDATA) may include the candidate time-of-flight (ToF) stored for each subframe. The image signal processor 150 may generate a histogram for one frame by accumulating data stored in units of a subframe, and may determine a target time-of-flight (ToF) for one frame based on the histogram. The target time-of-flight (ToF) may be determined for each pixel (PX), and the image signal processor 150 may determine a target distance (i.e., the distance to the target object 1 detected by each pixel PX) based on the candidate target time-of-flight (ToF) of each pixel (PX). A set (or aggregate) of target distances for pixels (PXs) included in the pixel array 110 may hereinafter be referred to as a depth image, and may be included in processed image data.

The image signal processor 150 may transmit the processed image data to a host device (not shown). The host device (not shown) may include a processor (e.g., an application processor) for processing image signal processed (ISP) image data received from the image signal processor 150, a memory (e.g., a non-volatile memory) for storing the ISP image data, a display device (e.g., a liquid crystal display (LCD)) for visually displaying the ISP image data, and the like.

The image signal processor 150 may transmit a control signal for controlling operations (whether or not to operate, an operation timing, an operation mode, etc.) of the image sensing device 100 to the image sensing device 100.

FIG. 2 is a block diagram 500 illustrating an image sensing device based on some embodiments of the present disclosure. In FIG. 2, the same content as those of FIG. 1 will herein be omitted for brevity.

Referring to FIG. 2, the block diagram 500 shown in FIG. 2 illustrates a portion of the image sensing device 100 depicted in FIG. 1. The block diagram 500 of FIG. 2 may include the sensor driver 120, the pixel array 110, and the SPAD controller 300.

The sensor driver 120 may include a column decoder 111, a row decoder 112, a bias voltage generator 113, and a bias voltage selection controller 114.

The column decoder 111 may generate a column selection signal (COL_SEL) capable of selecting the pixels (PXs) included in at least one of the plurality of column lines of the pixel array 110. For example, when the column decoder 111 selects pixels (PXs) included in a first column of the pixel array 110, the column decoder 111 may transmit a signal having a logic level of '1' (e.g., an activation level) to a signal line connected to the pixels (PXs) of the first column, and may transmit a signal having a logic level of '0' (e.g., a deactivation level) to a signal line connected to the pixels (PXs) of the remaining columns other than the first column.

The row decoder 112 may generate a row selection signal (ROW_SEL) capable of selecting the pixels (PXs) included in at least one of the plurality of row lines of the pixel array 110. For example, when the row decoder 112 selects pixels (PX) included in the first row, the row decoder 112 may transmit a signal having a logic level of '1' (e.g., an activation level) to a signal line connected to the pixels (PXs) of the first row, and may transmit a signal having a logic level of '0' (e.g., a deactivation level) to a signal line connected to the pixels (PXs) of the remaining rows other than the first row.

As a result, the row selection signal (ROW_SEL) and the column selection signal (COL_SEL) may be used to select one pixel (PX) among the plurality of pixels (PXs).

The bias voltage generator 113 may generate a plurality of bias voltages (VAs). For example, the bias voltage generator 113 may receive a source voltage (Vsrc), and may distribute (or divide) the source voltage (Vsrc) into multiple bias voltages (VAs) based on the voltage division principle. The bias voltage generator 113 may be, for example, a voltage splitter that generates multiple voltages using a plurality of resistors. However, the bias voltage generator 113 according to the present disclosure is not limited to a voltage splitter, and a person skilled in the art may select other circuits as needed to generate multiple voltages. The plurality of bias voltages (VAs) may be applied to the pixels (PXs), respectively. The number of bias voltages (VAs) and the magnitude of the source voltage (Vsrc) may be determined by a person skilled in the art according to design requirements, but the scope of the present disclosure is not limited thereto.

The bias voltage selection controller 114 may generate a bias voltage selection signal (BIAS_SEL). The bias voltage selection signal (BIAS_SEL) may be composed of P bits, where 'P' is an integer equal to or greater than '1'. The bias voltage selection signal (BIAS_SEL) may be provided to each of the pixels (PXs) included in the pixel array 110. The bias voltage selection signal (BIAS_SEL) may control a bias voltage selector 200 to be described later.

In addition, the bias voltage selection controller 114 may receive a decision signal (DCS) to be described later, and may fix the bias voltage selection signal (BIAS_SEL) to select a decision bias voltage.

The SPAD controller 300 may be connected to the pixel array 110 and the sensor driver 120. The SPAD controller 300 may include a monitoring circuit 310 and a determiner 320.

The monitoring circuit 310 may measure electrical characteristics of each pixel (PX). The monitoring circuit 310 may measure electrical characteristics of the SPAD for each pixel whenever each of multiple bias voltages (VAs) is applied to the SPAD included in each pixel (PX).

The determiner 320 may generate a decision signal (DCS) based on the electrical characteristics measured by the monitoring circuit 310. The decision signal (DCS) may control the bias voltage selection controller 114 to fix the bias voltage selection signal (BIAS_SEL) to select a decision bias voltage. A detailed description thereof will hereinafter be given in detail with reference to FIG. 3.

FIG. 3 is a diagram specifically illustrating a pixel based on some embodiments of the present disclosure.

Referring to FIG. 3, each of the plurality of pixels (PXs) included in the pixel array 110 may include a SPAD, a quenching circuit (QX), a pixel inverter (IV_P), a plurality of transistors (T1~Tn), where 'n' is an integer of 2 or greater, a bias voltage selector 200, and a pixel selector 230.

The SPAD may generate a voltage pulse in response to incident light. Specifically, the SPAD may detect a single photon of the reflected light (RL) reflected by the target object 1, and may generate a voltage pulse corresponding to the detected single photon. The SPAD may be used as a photodiode including a photosensitive P-N junction. In the SPAD, avalanche breakdown may be triggered by a single photon received in a Geiger mode that receives a reverse bias voltage at which a cathode-to-anode voltage is higher than a breakdown voltage, so that the SPAD can generate voltage pulses. As described above, a process in which avalanche breakdown is triggered by a single photon to generate a voltage pulse will hereinafter be referred to as an avalanche process.

One terminal (e.g., anode) of the SPAD may receive an anode voltage for applying a reverse bias voltage capable of operating the SPAD in the Geiger mode to the SPAD. For example, the anode voltage may be a voltage at which a value obtained by subtracting the quenching voltage (Vₑₓ) from the anode voltage becomes a negative(-) voltage having an absolute value higher than the absolute value of the breakdown voltage. The other terminal of the SPAD may be connected to a sensing node (SN), and the SPAD may output a voltage pulse generated by sensing the single photon to the sensing node (SN).

The quenching circuit (QX) may perform a quenching operation of clamping a voltage of the sensing node (SN) to a quenching voltage (Vₑₓ) when the avalanche current exceeds a threshold and may be turned off when the voltage of the sensing node (SN) returns above the quenching voltage (Vₑₓ). The quenching circuit (QX) may perform the quenching operation of returning the voltage of the sensing node (SN) to the quenching voltage (Vₑₓ) (or returning the SPAD to the Geiger mode) after the voltage of the sensing node (SN) is lowered due to generation of voltage pulses generated by avalanche breakdown. One terminal of the quenching circuit (QX) may receive the quenching voltage (Vₑₓ) for applying, to the SPAD, a reverse bias voltage for the SPAD to operate in the Geiger mode. A value obtained by subtracting the quenching voltage (Vₑₓ) from the anode voltage is negative, and the absolute value thereof may be greater than the absolute value of the breakdown voltage. The other terminal of the quenching circuit (QX) may be connected to the sensing node (SN), and the voltage of the sensing node (SN) may return to the quenching voltage (Vₑₓ) when the quenching circuit (QX) is turned on.

In some embodiments, the quenching circuit (QX) may be implemented as a P-channel metal oxide semiconductor (PMOS) transistor that receives a quenching control voltage (V_{qch}) through a gate terminal thereof. The quenching control voltage (V_{qch}) may have a turn-on voltage when the voltage of the sensing node (SN) is lowered due to the generation of voltage pulses, and may have a turn-off voltage when the voltage of the sensing node (SN) returns to the quenching voltage (Vₑₓ). For example, a quenching control voltage (V_{qch}) may be supplied from the sensor driver 120 or may be supplied from the sensing node (SN).

The pixel inverter (IV_P) may sample an analog voltage pulse generated from the sensing node (SN), and may convert the sampled analog voltage pulse into a digital pulse signal (i.e., SPAD pulse) having a waveform opposite to that of the analog voltage pulse. Here, the sampling method may be implemented by converting the voltage pulse into a pulse signal having a logic level of '0' or '1' according to whether the level of the voltage pulse is equal to or higher than a threshold level, but the scope or spirit of the disclosed technology is not limited thereto. The analog voltage pulse generated at the sensing node (SN) may have a waveform that is instantaneously lowered from the quenching voltage (Vₑₓ) by an avalanche process and then returns to the quenching voltage (Vₑₓ) by a quenching operation. Accordingly, since the pixel inverter (IV_P) converts the voltage pulse into a digital pulse signal having a waveform opposite to that of the voltage pulse, the pixel inverter (IV_P) may have a waveform in which the pixel signal (PX_OUT) corresponding to an output of the pixel inverter (IV_P) has a logic level of '0', then instantaneously transitions to a logic level of '1' (or a logic high level) when the voltage pulse is generated, and finally returns to a logic level of '0' (or a logic low level).

In some embodiments, a pulse of the pixel signal (PX_OUT) generated by the pixel inverter (IV_P) may be referred to as a single photon avalanche diode (SPAD) pulse.

Each of the plurality of transistors (T1~Tn) may have one terminal connected to one terminal of the SPAD (e.g., the anode). In some embodiments, one terminal of each of the transistors (T1~Tn) may be connected to a power node (PN). The other terminal of each of the transistors (T1~Tn) may receive a bias voltage. For example, the plurality of transistors (T1~Tn) may receive the plurality of candidate bias voltages (VA1~VAn), respectively. Specifically, the first to the n-th transistors (T1~Tn) may receive the first to the n-th candidate bias voltages (VA1~VAn), respectively. The plurality of bias voltages (VAs) obtained when the source voltage (Vsrc) is distributed by the bias voltage generator 113 as described with reference to FIG. 2 may include the plurality of candidate bias voltages (VA1~VAn).

The number of candidate bias voltages (VA1~VAn) may be equal to the number of transistors (T1~Tn). In some embodiments, the other terminal of the first transistor (T1) may receive the first candidate bias voltage (VA1). The other terminal of the second transistor (T2) may receive the second candidate bias voltage (VA2). The other terminal of the n-th transistor (Tn) may receive the n-th candidate bias voltage (VAn).

A gate terminal of each of the plurality of transistors (T1~Tn) may be connected to a storage circuit 220 to be described later. The storage circuit 220 may include a plurality of storage elements (SE1~SEn) for storing data or state information. For example, each of the storage elements (SE1~SEn) may be a latch, a flip-flop, a register, or the like. In some embodiments, each of the storage elements (SE1~SEn) may be implemented as a latch. Specifically, the gate terminals of the plurality of transistors (T1~Tn) may be connected to the plurality of storage elements (SE1~SEn) of the storage circuit 220, respectively. In some embodiments, the gate terminal of the first transistor (T1) may be connected to the first storage element (SE1), the gate terminal of the second transistor (T2) may be connected to the second storage element (SE2), and the gate terminal of the n-th transistor (Tn) may be connected to the n-th storage element (SEn).

Each of the plurality of transistors (T1~Tn) may be controlled by the storage circuit 220. For example, as data stored in the storage circuit 220 is output, each of the transistors (T1~Tn) may be turned on or off. The detailed operations of the transistors (T1~Tn) will be described in detail below.

The bias voltage selector 200 may include a storage circuit 220 and a bias decoder 210.

The storage circuit 220 may include a plurality of storage elements (SE1~SEn) configured to respectively control the plurality of transistors (T1~Tn). The storage circuit 220 may be activated or deactivated according to an enable signal (S_EN) to be described later. The storage circuit 220 may be activated when the enable signal (S_EN) has a logic level of '1' (e.g., an activation level), and may be deactivated when the enable signal (S_EN) has a logic level of '0' (e.g., a deactivation level).

The plurality of storage elements (SE1~SEn) may be connected to the gate terminals of the plurality of transistors (T1~Tn), respectively. Each of the storage elements (SE1~SEn) may store data having a logic level of '1' (or a logic high level) or a logic level of '0' (or a logic low level). For example, when a storage element stores data having a logic level of '1' and is activated, a voltage equal to or greater than a threshold (e.g., a threshold voltage) may be applied to a gate terminal of a transistor corresponding to the storage element.

For example, the first storage element (SE1) may store data having a logic level of '1', and each of the second to n-th storage elements (SE2~SEn) may store data having a logic level of '0'. When the storage circuit 220 is activated upon receiving the enable signal (S_EN) having a logic level of '1', the first through n-th storage elements (SE1~SEn) may be activated, and the data stored in each of the storage elements (SE1~SEn) may be output. Accordingly, the first transistor (T1) may be turned on, and the second to n-th transistors (T2~Tn) may be turned off. When the first transistor (T1) is turned on, the first candidate bias voltage (VA1) among the plurality of candidate bias voltages (VA1~VAn) may be applied as the anode voltage of the SPAD.

The bias decoder 210 may be connected to the storage circuit 220. The bias decoder 210 may receive a bias voltage selection signal (BIAS_SEL) generated by the bias voltage selection controller 114 of the sensor driver 120, and may control the plurality of storage elements (SE1~SEn) included in the storage circuit 220. For example, the bias decoder 210 may receive a signal of P bits, and may generate 2P output data values. For example, the bias decoder 210 may receive a 3-bit bias voltage selection signal (BIAS_SEL), and may generate eight output data values required to respectively control the eight storage elements.

The pixel selector 230 may receive a row selection signal (ROW_SEL) and a column selection signal (COL_SEL), and may generate an enable signal (S_EN) for activating or deactivating the storage circuit 220. The pixel selector 230 may activate the storage circuit 220 through the enable signal (S_EN), and may transmit the plurality of candidate bias voltages (VA1~VAn) to the anode of the SPAD. The row selection signal (ROW_SEL) may be a signal received from the row decoder 112, and the column selection signal (COL_SEL) may be a signal received from the column decoder 111, as described above with reference to FIG. 2.

For example, when both the row selection signal (ROW_SEL) and the column selection signal (COL_SEL) have a logic level of '1', the pixel selector 230 may generate the enable signal (S_EN) having a logic level of '1'. When at least one of the row selection signal (ROW_SEL) or the column selection signal (COL_SEL) has a logic level of '0', the pixel selector 230 may generate the enable signal (S_EN) having a logic level of '0'. The pixel selector 230 included in the pixel (PX) selected by the row selection signal (ROW_SEL) and the column selection signal (COL_SEL) may generate the enable signal (S_EN) for activating the storage circuit 220. Accordingly, the storage circuit 220 included in the selected pixel (PX) may be activated, and data stored in each of the plurality of storage elements (SE1~SEn) may be output.

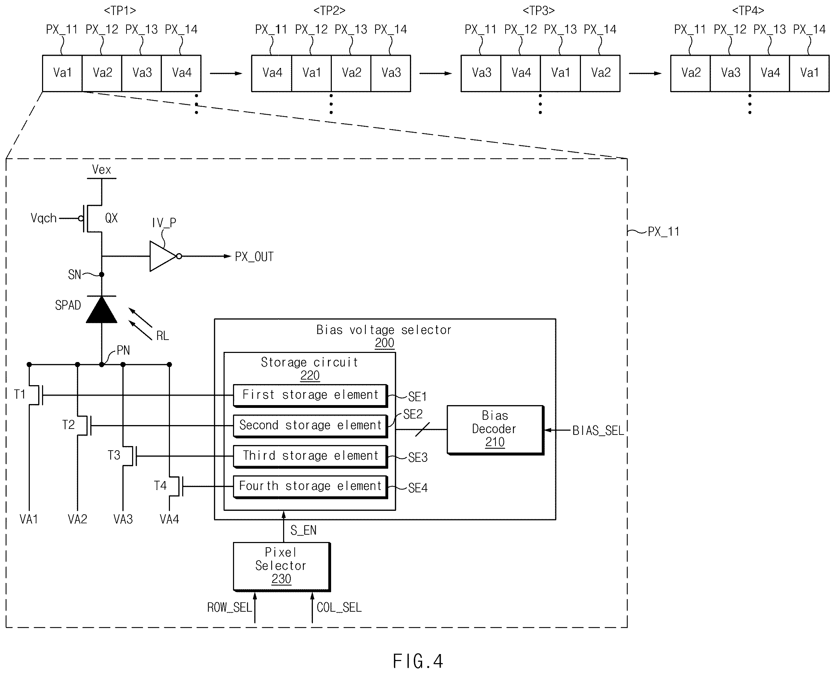

FIG. 4 is a diagram illustrating a method for operating the image sensing device based on some embodiments of the present disclosure. Hereinafter, the method for operating the image sensing device according to the present disclosure will be described with reference to FIGS. 2 to 4.

Referring to FIG. 4, among the plurality of pixels (PXs) consecutively arranged in a two-dimensional (2D) matrix structure as shown in FIG. 2, some pixels (PX_11~PX_14) included in the first row are illustrated. For simplicity of description, pixels (PX_11~PX_14), that are located in four columns of the first row and correspond to a portion of the pixel array 110, will be described by way of example, and the plurality of bias voltages (VAs) will be described as including four voltages. However, the following description may also be equally applied to the case in which the pixel array 110 is structured to have M columns, where 'M' is a positive integer, and N bias voltages (VAs).

According to some embodiments of the present disclosure, the pixels in the first row may include a first pixel (PX_11) located at the first column of the first row, a second pixel (PX_12) located at the second column of the first row, a third pixel (PX_13) located at the third column of the first row, and a fourth pixel (PX_14) located at the fourth column of the first row.

For simplicity of description, the first pixel (PX_11) will hereinafter be described first.

Referring to FIGS. 2 to 4, the first pixel (PX_11) may include a first transistor (T1), a second transistor (T2), a third transistor (T3), and a fourth transistor (T4). The source voltage (Vsrc) may be distributed into the plurality of bias voltages (VAs) by the bias voltage generator 113. The plurality of bias voltages (VAs) may include a first candidate bias voltage (VA1), a second candidate bias voltage (VA2), a third candidate bias voltage (VA3), and a fourth candidate bias voltage (VA4). The storage circuit 220 may include a first storage element (SE1), a second storage element (SE2), a third storage element (SE3), and a fourth storage element (SE4).

The first to fourth transistors (T1~T4) may receive the first to fourth candidate bias voltages (VA1~VA4), respectively. The gate terminals of the first to fourth transistors (T1~T4) may be connected to the first to fourth storage elements (SE1~SE4), respectively.

The bias voltage selection signal (BIAS_SEL) may have a 2-bit value. The bias decoder 210 may receive a 2-bit bias voltage selection signal (BIAS_SEL), and may generate four output data signals. The four output data signals may include first output data, second output data, third output data, and fourth output data, respectively.

The bias decoder 210 may transmit the first output data to the first storage element (SE1), may transmit the second output data to the second storage element (SE2), may transmit the third output data to the third storage element (SE3), and may transmit the fourth output data to the fourth storage element (SE4). The bias decoder 210 may activate one of the first to fourth output data signals in response to the bias voltage selection signal (BIAS_SEL).

For example, when the bias voltage selection signal (BIAS_SEL) has a value of '00', the first output data may have a logic level of '1', and the remaining output data may have a logic level of '0'. When the bias voltage selection signal (BIAS_SEL) has a value of '01', the second output data may have a logic level of '1', and the remaining output data may have a logic level '0'. When the bias voltage selection signal (BIAS_SEL) has a value of '10', the third output data may have a logic level of '1', and the remaining output data may have a logic level of '0'. When the bias voltage selection signal (BIAS_SEL) has a value of '11', the fourth output data may have a logic level of '1', and the remaining output data may have a logic level of '0'.

A test operation may be performed for each of the first to fourth pixels (PX_11~PX_14). The test operation may include a plurality of time periods (i.e., intervals). The number of time periods may be equal to the number of bias voltages (VAs). In some embodiments, the test operation may include a first period (TP1), a second period (TP2), a third period (TP3), and a fourth period (TP4). The following description will focus on the test operation for the first pixel (PX_11). The test operation to be described below may also be applied to the second to fourth pixels (PX_12~PX_14).

In the first period (TP1), the bias decoder 210 included in the first pixel (PX_11) may receive a bias voltage selection signal (BIAS_SEL) having a value of '00', and may thus activate the first output data. Accordingly, the first storage element (SE1) may store data having a logic level of '1', and each of the second to fourth storage elements (SE2~SE4) may store data having a logic level of '0'. Then, the pixel selector 230 may receive the row selection signal (ROW_SEL) and the column selection signal (COL_SEL), and may generate the enable signal (S_EN) having a logic level of '1'. Subsequently, the storage circuit 220 may be activated, and may output the stored data. As a result, the first transistor (T1) may be turned on, and each of the second to fourth transistors (T2~T4) may be turned off. As the first transistor (T1) is turned on, the first candidate bias voltage (VA1) may be applied to the anode of the SPAD.

The monitoring circuit 310 of the SPAD controller 300 may measure the electrical characteristics of the SPAD to which the first candidate bias voltage (VA1) is applied. For example, the monitoring circuit 310 may measure a cathode voltage of the SPAD at the sensing node (SN). In another embodiment, the monitoring circuit 310 may measure the current (e.g., leakage current) flowing through a power node (PN) of the SPAD. In yet another embodiment, the monitoring circuit 310 may measure both the cathode voltage of the SPAD and the leakage current of the SPAD. After measuring the above-described electrical characteristics of the SPAD, the monitoring circuit 310 may store the measured resultant value.

In the second period (TP2) after the first period (TP1), the bias decoder 210 included in the first pixel (PX_11) may receive the bias voltage selection signal (BIAS_SEL) having a value of '11', and may activate the fourth output data. Accordingly, the fourth storage element (SE4) may store data having a logic level of '1' and the remaining storage elements may store data having a logic level of '0'. Then, the pixel selector 230 may generate the enable signal (S_EN) having a logic level of '1', and the storage circuit 220 may be activated. As a result, the stored data may be output from the storage circuit 220. Accordingly, the fourth transistor (T4) is turned on, so that the fourth candidate bias voltage (VA4) may be applied to the anode of the SPAD. The monitoring circuit 310 of the SPAD controller 300 may measure the electrical characteristics of the SPAD to which the fourth candidate bias voltage (VA4) is applied, and may store the measured resultant value.

In the third period (TP3) after the second period (TP2), the bias decoder 210 included in the first pixel (PX_11) may receive the bias voltage selection signal (BIAS_SEL) having a value of '10', and may activate the third output data. Accordingly, the third storage element (SE3) may store data having a logic level of '1' and the remaining storage elements may store data having a logic level of '0'. Then, the pixel selector 230 may generate the enable signal (S_EN) having a logic level of '1', and the storage circuit 220 may be activated. As a result, the stored data may be output from the storage circuit 220. Accordingly, the third transistor (T3) is turned on, so that the third candidate bias voltage (VA3) may be applied to the anode of the SPAD. The monitoring circuit 310 of the SPAD controller 300 may measure the electrical characteristics of the SPAD to which the third candidate bias voltage (VA3) is applied, and may store the measured resultant value.

In the fourth period (TP4) after the third period (TP3), the bias decoder 210 included in the first pixel (PX_11) may receive the bias voltage selection signal (BIAS_SEL) having a value of '01', and may activate the second output data. Accordingly, the second storage element (SE2) may store data having a logic level of '1' and the remaining storage elements may store data having a logic level of '0'. Then, the pixel selector 230 may generate the enable signal (S_EN) having a logic level of '1', and the storage circuit 220 may be activated. As a result, the stored data may be output from the storage circuit 220. Accordingly, the second transistor (T2) is turned on, so that the second candidate bias voltage (VA2) may be applied to the anode of the SPAD. The monitoring circuit 310 of the SPAD controller 300 may measure the electrical characteristics of the SPAD to which the second candidate bias voltage (VA2) is applied, and may store the measured resultant value.

As described above, when the bias voltage selection signal (BIAS_SEL) is input to the bias voltage selector 200, the first transistor (T1) may transmit the first candidate bias voltage (VA1) to the SPAD of the first pixel (PX_11), the second transistor (T2) may transmit the second candidate bias voltage (VA2) to the SPAD of the first pixel (PX_11), the third transistor (T3) may transmit the third candidate bias voltage (VA3) to the SPAD of the first pixel (PX_11), and the fourth transistor (T4) may transmit the fourth candidate bias voltage (VA4) to the SPAD of the first pixel (PX_11). However, the order in which the candidate bias voltages (VA1~VA4) are applied to the SPAD is not limited thereto. For example, the candidate bias voltages (VA1~VA4) may be sequentially applied to the SPAD as needed.

After the test operations of the first to fourth periods (TP1~TP4) are performed for the first pixel (PX_11), the determiner 320 of the SPAD controller 300 may determine a final bias voltage (hereinafter referred to as a decision bias voltage) to be applied to the anode of the SPAD. The determiner 320 may determine the decision bias voltage based on the electrical characteristics measured and stored by the monitoring circuit 310.

For example, whenever each of the first to fourth candidate bias voltages (VA1~VA4) is applied to the anode of the SPAD, the monitoring circuit 310 may measure a cathode voltage of the SPAD and may store the measured voltage values. Based on the measured voltage values stored in the monitoring circuit 310, the determiner 320 may determine the decision bias voltage that causes the optimal SPAD cathode voltage. With the optimal SPAD cathode voltage, the SPAD can operate stably in the Geiger mode, but the scope of the present disclosure is not limited thereto. If necessary, a reference value (i.e., criteria) of the optimal SPAD cathode voltage may be appropriately determined by a person skilled in the art.

For example, the optimal SPAD cathode voltage for each candidate bias voltage may be determined experimentally in advance. Subsequently, the monitoring circuit 310 may pre-store a table in which each candidate bias voltage and the optimal SPAD cathode voltage are matched with each other. Thereafter, the determiner 320 may determine, as the decision bias voltage, the candidate bias voltage that has generated the measured SPAD voltage, which is one of the measured voltage values obtained through the above-described test operations with the first to fourth candidate bias voltages (VA1~VA4), a difference between the pre-stored optimal SPAD cathode voltage and the measured SPAD cathode voltage being minimum. That is, the determiner 320 may determine, as the decision bias voltage, a candidate bias voltage corresponding to the pre-stored optimal SPAD cathode voltage having the minimum difference from the measured SPAD cathode voltage corresponding to the candidate bias voltage, thereby the pre-stored optimal SPAD cathode voltage being regarded as the optimal SPAD cathode voltage caused by the determined decision bias voltage.

In another embodiment, whenever each of the first to fourth candidate bias voltages (VA1~VA4) is applied to the anode of the SPAD, the monitoring circuit 310 may measure and store the leakage current of the SPAD. As a result, the determiner 320 may determine the decision bias voltage causing the optimal leakage current, which may be the minimum one among the measured leakage currents of the SPAD. The determiner 320 may determine, as the decision bias voltage, the candidate bias voltage causing the optimal leakage current or the minimum leakage current.

In yet another embodiment, the determiner 320 may determine, as the decision bias voltage, the candidate bias voltage causing both the optimal SPAD cathode voltage and the optimal leakage current.

However, when the decision bias voltage is not determined through the above-described process, the above-described process may be repeatedly performed after the plurality of bias voltages (VAs) is adjusted by changing the source voltage (Vsrc).

After determining the decision bias voltage, the determiner 320 may generate a decision signal (DCS) that identifies the decision bias voltage among the plurality of bias voltages (VAs). The bias voltage selection controller 114 of the sensor driver 120 may receive the decision signal (DCS), and may fix the bias voltage selection signal (BIAS_SEL) to select the decision bias voltage. The bias decoder 210 may receive the bias voltage selection signal (BIAS_SEL), and may activate output data corresponding to the received bias voltage selection signal (BIAS_SEL).

For example, when the first candidate bias voltage (VA1) is determined to be the decision bias voltage after performing the aforementioned test operation, the bias voltage selection controller 114 may fix the bias voltage selection signal (BIAS_SEL) to a value of '00'. The bias voltage selection controller 114 may maintain the fixed bias voltage selection signal (BIAS_SEL) until a new test operation is started. The bias decoder 210 may receive the bias voltage selection signal (BIAS_SEL) having the value of '00', and may activate the first output data.

The above-described test operation may also be performed in the same manner as in the remaining pixels (PXs). For example, the first to fourth candidate bias voltages (VA1~VA4) may be sequentially applied to the SPADs of the second to fourth pixels (PX_12~PX_14). Whenever the candidate bias voltage is applied to SPADs of such pixels, the monitoring circuit 310 may measure and store the electrical characteristics of the SPADs. Based on the electrical characteristics measured and stored by the monitoring circuit 310, the determiner 320 may determine the decision bias voltage to be applied to the SPAD of each of the second to fourth pixels (PX_12~PX_14).

The aforementioned test operation may, for example, be performed simultaneously on pixels (PXs) included in the same row. As illustrated in FIG. 4, in the first period (TP1), the bias voltage selection signal (BIAS_SEL), the bias voltage selector 200, and the first to fourth transistors (T1~T4) may enable the first candidate bias voltage (VA1) to be applied to the SPAD of the first pixel (PX_11), may enable the second candidate bias voltage (VA2) to be applied to the SPAD of the second pixel (PX_12), may enable the third candidate bias voltage (VA3) to be applied to the SPAD of the third pixel (PX_13), and may enable the fourth candidate bias voltage (VA4) to be applied the SPAD of the fourth pixel (PX_14). Subsequently, the monitoring circuit 310 of the SPAD controller 300 may measure and store the electrical characteristics of the SPADs of the first to fourth pixels (PX_11~PX_14).

In the second period (TP2), the bias voltage selection signal (BIAS_SEL), the bias voltage selector 200, and the first to fourth transistors (T1~T4) may enable the fourth candidate bias voltage (VA4) to be applied to the SPAD of the first pixel (PX_11), may enable the first candidate bias voltage (VA1) to be applied to the SPAD of the second pixel (PX_12), may enable the second candidate bias voltage (VA2) to be applied to the SPAD of the third pixel (PX_13), and may enable the third candidate bias voltage (VA3) to be applied to the SPAD of the fourth pixel (PX_14). Subsequently, the monitoring circuit 310 of the SPAD controller 300 may measure and store the electrical characteristics of the SPADs of the first to fourth pixels (PX_11~PX_14).

In the third period (TP3), the bias voltage selection signal (BIAS_SEL), the bias voltage selector 200, and the first to fourth transistors (T1~T4) may enable the third candidate bias voltage (VA3) to be applied to the SPAD of the first pixel (PX_11), may enable the fourth candidate bias voltage (VA4) to be applied to the SPAD of the second pixel (PX_12), may enable the first candidate bias voltage (VA1) to be applied to the SPAD of the third pixel (PX_13), and may enable the second candidate bias voltage (VA2) to be applied to the SPAD of the fourth pixel (PX_14). Subsequently, the monitoring circuit 310 of the SPAD controller 300 may measure and store the electrical characteristics of the SPADs of the first to fourth pixels (PX_11~PX_14).

In the fourth period (TP4), the bias voltage selection signal (BIAS_SEL), the bias voltage selector 200, and the first to fourth transistors (T1~T4) may enable the second candidate bias voltage (VA2) to be applied to the SPAD of the first pixel (PX_11), may enable the third candidate bias voltage (VA3) to be applied to the SPAD of the second pixel (PX_12), may enable the fourth candidate bias voltage (VA4) to be applied to the SPAD of the third pixel (PX_13), and may enable the first candidate bias voltage (VA1) to be applied to the SPAD of the fourth pixel (PX_14). Subsequently, the monitoring circuit 310 of the SPAD controller 300 may measure and store the electrical characteristics of the SPADs of the first to fourth pixels (PX_11~PX_14).

Subsequently, the determiner 320 of the SPAD controller 300 may determine the decision bias voltage to be applied to the anode of the SPAD of each of the first to fourth pixels (PX_11~PX_14).

As described above, the bias voltage selection signal (BIAS_SEL), the bias voltage selector 200, and the first to fourth transistors (T1~T4) may be configured to differently select the candidate bias voltages of the first to fourth pixels (PX_11~PX_14) during the first to fourth periods (TP1~TP4), thereby reducing load applied to the bias voltage generator 113. In addition, as the test operation is simultaneously performed on pixels included in the same row, the execution time of such test operation can be shortened.

The test operation described above with reference to FIGS. 2 to 4 may be performed, for example, during the initial operation after power is supplied to the image sensing device 100. However, the test operation may also be performed as needed by a person skilled in the art, but the scope of the execution time at which the test operation is to be performed is not limited to first activation of the image sensing device 100.

The image sensing device based on some embodiments of the present disclosure may select a decision bias voltage to be applied to the anode of the SPAD, and may control each of the pixels to operate in an optimal state.

Furthermore, as a decision bias voltage for each pixel is selected, a deviation between the pixels included in the pixel array may be reduced.

The number of bias voltages, the number of storage elements, etc. described in the embodiments of the present disclosure are merely illustrative, and may be changed within a range to which the technical idea of the present disclosure can be applied.

As is apparent from the above description, the image sensing device and the method for operating the same according to the embodiments of the present disclosure may control each pixel to advantageously operate in an optimal state, thereby reducing a deviation between pixels included in the pixel array.

The embodiments of the present disclosure may provide a variety of effects capable of being directly or indirectly recognized by one of ordinary skill in the art.

Those skilled in the art will appreciate that the embodiments of the present disclosure may be carried out in other specific ways than those set forth herein. In addition, claims that are not explicitly presented in the appended claims may be presented in combination as an embodiment or included as a new claim by a subsequent amendment after the application is filed.

Although a number of illustrative embodiments have been described, it should be understood that modifications and enhancements to the disclosed embodiments and other embodiments can be devised based on what is described and/or illustrated in the present disclosure. Furthermore, the embodiments may be combined to form additional embodiments.

## Claims

1. An image sensing device comprising:
a single photon avalanche diode (SPAD) configured to generate a voltage pulse in response to incident light;
a bias voltage generator configured to generate a plurality of bias voltages based on a source voltage;
a bias voltage selection controller configured to generate a bias voltage selection signal for selecting candidate bias voltages to be applied to an anode of the SPAD from among the plurality of bias voltages; and
a single photon avalanche diode (SPAD) controller configured to determine one of the candidate bias voltages as a decision bias voltage to be applied to the anode of the SPAD, based on electrical characteristics of the SPAD, which are measured respectively when the candidate bias voltages are applied to the SPAD.

2. The image sensing device according to claim 1, further comprising:
a bias voltage selector configured to select the candidate bias voltages based on the bias voltage selection signal.

3. The image sensing device according to claim 2, wherein the bias voltage selector includes:
a plurality of transistors configured to respectively apply the plurality of bias voltages; and
a storage circuit including a plurality of storage elements configured to respectively control the plurality of transistors.

4. The image sensing device according to claim 3, wherein the storage circuit is configured to:
receive an enable signal for activating the storage circuit; and
turn on the individual transistors corresponding to the respective candidate bias voltages.

5. The image sensing device according to claim 2, wherein the bias voltage selector is configured to:
sequentially select the plurality of bias voltages as the candidate bias voltages.

6. The image sensing device according to claim 5, wherein the SPAD controller includes:
a monitoring circuit configured to measure cathode voltages of the SPAD as the electrical characteristics; and
a determiner configured to determine the decision bias voltage to be applied to the anode based on the cathode voltages of the SPAD.

7. The image sensing device according to claim 6, wherein:
the SPAD controller generates a decision signal for determining the decision bias voltage; and
the bias voltage selection controller receives the decision signal and fixes the bias voltage selection signal to select the decision bias voltage from among the candidate bias voltages.

8. The image sensing device according to claim 5, wherein the SPAD controller includes:
a monitoring circuit configured to measure leakage currents of the SPAD as the electrical characteristics; and
a determiner configured to determine the decision bias voltage to be applied to the anode based on the leakage currents.

9. The image sensing device according to claim 8, wherein the determiner is configured to:
determine, as the decision bias voltage, the candidate bias voltage corresponding to a minimum one among the leakage currents, which correspond to the respective candidate bias voltages.

10. The image sensing device according to claim 1, wherein:
the SPAD operates in a Geiger mode to detect a single photon of the incident light and generate the voltage pulse, and
the image sensing device further comprises:
a quenching circuit configured to perform a quenching operation to return the SPAD to the Geiger mode; and
a pixel inverter configured to convert the voltage pulse into a SPAD pulse having a waveform opposite to that of the voltage pulse.

11. The image sensing device according to claim 10, wherein:
one terminal of the quenching circuit receives a quenching voltage; and
an absolute value of a value obtained by subtracting the quenching voltage from a voltage applied to the anode is greater than an absolute value of a breakdown voltage of the SPAD.

12. An image sensing device comprising:
a pixel array including a plurality of pixels;
a bias voltage generator configured to generate a plurality of bias voltages based on a source voltage; and
a single photon avalanche diode (SPAD) controller configured to determine one of the plurality of bias voltages as a decision bias voltage;
wherein each of the plurality of pixels includes:
a SPAD configured to generate a voltage pulse in response to incident light;
a bias voltage selector configured to select candidate bias voltages to be applied to an anode of the SPAD from among the plurality of bias voltages; and
a pixel selector configured to activate a storage circuit included in the bias voltage selector to apply the candidate bias voltage to the anode of the SPAD,
wherein
the SPAD controller determines the decision bias voltage based on electrical characteristics of the SPAD, which are measured respectively when the candidate bias voltages are applied to the SPAD.

13. The image sensing device according to claim 12, further comprising:
a column decoder configured to generate a column selection signal; and
a row decoder configured to generate a row selection signal,
wherein
the pixel selector is configured to activate the storage circuit based on the column selection signal and the row selection signal.

14. The image sensing device according to claim 13, further comprising:
a bias voltage selection controller configured to generate a bias voltage selection signal for selecting the candidate bias voltages,
wherein
the SPAD controller includes a determiner configured to generate a decision signal for determining the decision bias voltage; and
the bias voltage selection controller receives the decision signal and fixes the bias voltage selection signal to select the decision bias voltage from among the candidate bias voltages.

15. The image sensing device according to claim 14, wherein the SPAD controller further includes:
a monitoring circuit configured to measure the electrical characteristics of the SPAD.
